Europäisches Patentamt

European Patent Office

Office européen des brevets

(19)

(11) Veröffentlichungsnummer : **0 037 954**
**B1**

(12)

# EUROPÄISCHE PATENTSCHRIFT

(45) Veröffentlichungstag der Patentschrift :
04.07.84

(21) Anmeldenummer : 81102408.2

(22) Anmeldetag : 31.03.81

(51) Int. Cl.³ : **H 01 M 10/52**, H 01 M  2/12,
H 01 M 10/50

(54) **Verschlusstopfen mit Rekombinator.**

(30) Priorität : **10.04.80 DE 3013754**

(43) Veröffentlichungstag der Anmeldung :
**21.10.81 Patentblatt 81/42**

(45) Bekanntmachung des Hinweises auf die Patenterteilung   04.07.84 Patentblatt 84/27

(84) Benani e Vertragsstaaten :
**AT FR GB SE**

(56) Entgegenhaltungen :
**DE-A- 2 722 690**
**DE-B- 2 213 219**

(73) Patentinhaber : **VARTA Batterie Aktiengeselischaft**
**Am Leineufer 51**
**D-3000 Hannover 21 (DE)**

(72) Erfinder : **Ledjeff, Konstantin, Dr.**
**Pommernstrasse 82**
**D-6231 Schwalbach (DE)**

(74) Vertreter : **Kaiser, Dieter Ralf, Dipl.-Ing.**
**Gundelhardtstrasse 72**
**D-6233 Kelkheim/Ts. (DE)**

**Beschreibung**

Die Erfindung betrifft einen Verschlußstopfen für Akkumulatoren mit wässrigem Elektrolyten, der eine Vorrichtung zur katalytischen Rekombination der im Betrieb des Akkumulators entstehenden Gase besitzt.

Beim Einsatz von Rekombinatoren auf Akkumulatorenzellen und Batterien treten häufig thermische Probleme auf, da die Knallgasrekombination ein stark exothermer Vorgang ist und dementsprechend hohe Wärmebeträge an die Umgebung abgeführt werden müssen. Eine extreme Belastung der Rekombinatoren tritt während der Ladephase auf, die meist bis in die volle Gasung ausgedehnt wird. Der gesamte Ladestrom wird dann nur noch zur Elektrolyse des Wassers verbraucht und das Knallgasangebot zur Umsetzung am Rekombinationskatalysator ist entsprechend hoch.

Bei ausreichender Dimensionierung sollte ein Rekombinator in der Lage sein, diese Elektrolysegase ohne Überhitzung zu rekombinieren. Die Größe der Wärmeaustauschflächen und damit die äußeren Abmessungen des Rekombinators wären damit auf die Ladegasung abgestimmt. Ein solcher Rekombinator erweist sich als unzweckmäßig für Betriebsphasen mit geringerem Gasanfall, z. B. Entladung, weil er für diese überdimensioniert ist. Andererseits würde sich der Rekombinator bei der Ladung überhitzen, wäre er mit seinen Abmessungen lediglich den Entladegasen angepaßt.

Es ist u. a. bereits versucht worden, die Wärmeabfuhr aus dem Rekombinator dadurch wirksamer zu gestalten, daß der Katalysatorträger in großflächigem Kontakt mit einem metallischen, also gut wärmeleitenden Deckel des Stopfengehäuses steht und dadurch mit diesem thermisch gekoppelt ist. Ein solcher Verschlußstopfen ist aus der DE-OS 2 442 465 bekannt. Die Rekombinationswärme wird hierbei überwiegend durch Konvektion und Strahlung an die Umgebungsluft abgegeben.

Da die größte Belastung des Rekombinators mit dem Ende der Ladung und gegebenenfalls einer Überladung, die nur eine kurze Betriebsphase ist, zusammenfällt, ist ein großer Wärmeausstoß auf eine verhältnismäßig kleine Zeitspanne beschränkt.

Der Erfindung liegt daher die Aufgabe zugrunde, die Wärmeabgabe aus der Gasrekombination über einen größeren Zeitraum zu verteilen.

Die Aufgabe wird erfindungsgemäß dadurch gelöst, daß ein wasseradsorbierendes Molekularsieb oder ein auf einem Träger angebrachtes anderes Material mit hoher spezifischer Wärmekapazität, ausgewählt aus der Stoffgruppe Salzhydrate, Öle und kristallines, vernetztes Kunstharz aus der Reihe der Epoxidharze, der Polyurethanharze oder der Polyesterharze auf einer Außenfläche des Stopfens in wärmeleitender Verbindung mit dem Katalysatormaterial angeordnet ist.

Auf diese Weise ist es möglich, einer Überhitzung des Rekombinators entweder durch Weitergabe der Wärme an einen Speicher oder durch Aufzehrung in Verbindung mit einem wärmeverbrauchenden Vorgang vorzubeugen.

Als geeignete Wärmespeicher kommen Stoffe infrage, die eine hohe spezifische Wärme besitzen oder bei denen durch Wärmezufuhr Phasenumwandlungen stattfinden können. Als Beispiele seien Salzhydrate wie $Na_2SO_4 \cdot 10 H_2O$, Öle und Kunstharze genannt. Bei den letztgenannten handelt es sich insbesondere um Produkte aus der Reihe der Epoxidharze, der Polyurethanharze und der Polyesterharze mit zumindest teilkristallinen Netzstrukturen. Ihre Verwendung als Speichermaterial in Latentwärmespeichern ist z. B. Gegenstand der DE-OS 2 523 273.

Während der Ladephase nehmen alle diese Stoffe Wärme unter geringer Temperaturerhöhung auf und geben sie während der Entladung langsam an die Umgebung ab. Ein Speicher der genannten Art wäre somit in der Lage, den Rekombinator thermisch zu entlasten.

Besonders vorteilhaft ist es jedoch, die wärmeproduzierende Gasrekombination mit einer wärmeverzehrenden chemischen Reaktion, einer Verdampfung oder einer Desorption zu koppeln. Dadurch wird eine Absenkung der Wärme erzielt und ein u. U. schädlicher Wärmestau verhindert.

Die Stoffe, welche einer solchen endothermen Umwandlung unterzogen werden sollen, sind dabei zweckmäßig auf einem Träger fixiert, welcher sich auf einer Außenfläche des Stopfens in wärmeleitender Verbindung mit dem Katalysatormaterial befindet.

Der Träger selbst sollte ein gutes Adsorptionsvermögen gegenüber dem aufzunehmenden Stoff besitzen. Dadurch ist es möglich, die Rekombinationswärme besonders wirksam abzubauen, indem sie zur Abtrennung des Adsorbens vom Träger sowohl die notwendige Desorptionsenergie als auch die Verdampfungsenergie liefern muß.

Eine besonders günstige Ausführungsform der Erfindung liegt vor, wenn ein Molekularsieb als Trägermaterial mit Wasser als adsorbierbarem Material im Austausch steht.

Als Molekularsiebe bezeichnet man Zeolithe, welche sich gegenüber Gasen und Flüssigkeiten durch hohe Adsorptionsfähigkeit auszeichnen. Dabei ist es in dem erfindungsgemäßen Zusammenhang wichtig, daß die Adsorption mit Wärmeentwicklung und die Desorption mit Wärmeaufnahme verbunden ist. Da weitere Wärme für die Verdampfung benötigt wird und im Falle des Wassers die Desorptionsenergie etwa mit der Hälfte der Verdampfungsenergie angesetzt werden darf, kann die Rekombinationswärme besonders wirksam abgebaut werden.

Molekularsiebe lassen sich als Schüttungen oder Gerüststrukturen in beliebe Formen bringen und den gegebenen Einbauverhältnissen in einer Vorrichtung leicht anpassen.

Stellt man daher zwischen dem Rekombinator, gegebenenfalls mit dem Katalysatorträger selbst als unmittelbarem Entstehungsort der Rekombinationswärme, und dem Molekularsieb eine wärmeleitende Verbindung her, kann bei kurzzeitigen Wärmespitzen der hohe Wärmefluß in das Molekularsieb übergehen und dort zur Desorption und Verdampfung von Wasser verbraucht werden, welches das Molekularsieb zuvor als Luftfeuchtigkeit aufgenommen hat. Aus der Sicht des Rekombinators bzw. Katalysatorträgers stellt das Molekularsieb also ein wärmesenkendes Mittel dar.

Für das Molekularsieb ist die Desorption des Wassers mit Hilfe der Rekombinationswärme gleichbedeutend mit einer Trocknung. Ist das Molekularsieb trocken, ist seine Aktivität wieder voll hergestellt, d. h. es kann erneut mit Feuchtigkeit beladen werden. Diese entzieht es während Ruhezeiten oder während der Entladung der vorbeiströmenden Luft. Eine nennenswerte Temperaturerhöhung bleibt wegen des in der Zeiteinheit geringen Umsatzes aus.

Durch die Beladung mit Feuchtigkeit, ein unter Abgabe von Adsorptionswärme freiwillig verlaufender Vorgang, findet eine Selbstregenerierung des Molekularsiebes zum wärmeverzehrenden Mittel statt, da es am Ende erneut in der Lage ist, dem heiß werdenden Katalysatorträger die zur Entfernung des Wassers notwendige Desorptionsenergie in Form von Wärme zu entziehen. Die mit der Desorption identische Trocknung ist kein momentan ablaufender Vorgang, sondern mit gewisser zeitlicher Trägheit behaftet. Dies hat zur Folge, daß sich der Wärmeabfluß aus dem Rekombinator während der Spitzenbelastung mehr oder weniger zeitlich verschleppt und somit bis in die anschließende Entlade- oder Ruhepause hinein ausgedehnt wird, in welcher der Rekombinator nahezu unbelastet ist.

Am Ende der Trocknung ist das Molekularsieb voll aktiv und zu neuer Wasseraufnahme bereit. Dieser Zustand ist vergleichbar mit dem eines blanken unedlen Metalls, das sich außerhalb einer Schutzgasatmosphäre von selbst mit einer Deckschicht zu überziehen trachtet.

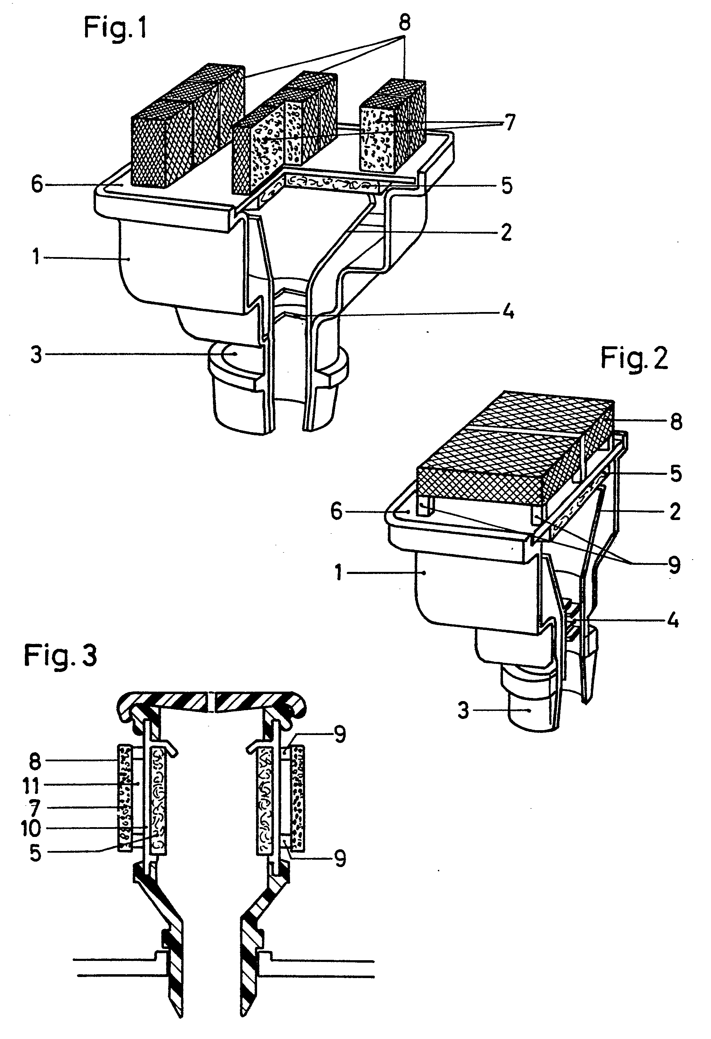

Die Figuren 1-3 zeigen Verschlußstopfen mit Rekombinationsvorrichtungen, die erfindungsgemäß mit Molekularsieben versehen sind.

Beispielsweise kann nach den Figuren 1 und 2 der aus der DE-OS 2 442 465 bekannte Stopfen mit quaderförmigem Kunststoffgehäuse 1 verwendet werden. Durch den Trichter 2 werden die durch den Stutzen 3 und das Gaslabyrinth aufsteigenden Elektrolytgase gleichmäßig über den Katalysator 5 verteilt. Dieser ist zum Zweck einer wirksamen Wärmeableitung großflächig mit dem Metalldeckel 6 aus nichtrostendem Stahl verbunden.

Gemäß Figur 1 kann nun das Molekularsieb als Schüttung 7 in blockförmigen Käfigen 8 aus beispielsweise einem feinmaschigen Nickeldrahtgewebe untergebracht sein, welche fest auf dem Deckel 6 stehen. Die Zwischenräume zwischen den Blöcken müssen so bemessen sein, daß eine gute Durchlüftung gewährleistet ist.

Figur 2 zeigt eine andere Anordnung, bei welcher der Käfig 8 für das Molekularsieb tafelförmig ausgebildet und mittels Distanzhalter 9 aus Metall auf dem Deckel, planparallel zu seiner Oberfläche, positioniert ist.

Bei einer zylindrischen Ausführung des Rekombinatorstopfens gemäß Figur 3 kann es vorteilhaft sein, den Mantel 10 des Zylinders aus rostfreiem Stahlblech, auf dessen Innenseite der Katalysator 5 angeordnet ist, außen mit einem ringförmigen Käfig 8 für die Molekularsiebschüttung 7 zu umgeben, wobei wiederum Distanzhalter 9 für eine Luftkonvektion in dem schmalen Ringspalt 11 sorgen. Bei nur geringer Dicke der Molekularsiebschüttung kann der Käfig 8 dem Zylindermantel auch direkt anliegen und der Ringspalt 11 entfallen.

Mit dem erfindungsgemäßen Einsatz wärmespeichernder oder wärmezehrender Mittel in einem Verschlußstopfen mit Rekombinator wird eine über die Betriebsphasen des Akkumulators gleichmäßiger verteilte Wärmeabführung ohne Überhitzungsgefahr und darüber hinaus eine sinnvolle Dimensionierung des Stopfens möglich gemacht, die zwischen den bisherigen extremen Erfordernissen für eine maximale und eine minimale Gasung liegt.

**Ansprüche**

1. Verschlußstopfen für Akkumulatoren mit wässrigem Elektrolyten, der eine Vorrichtung zur katalytischen Rekombination der im Betrieb des Akkumulators entstehenden Gase besitzt, dadurch gekennzeichnet, daß ein wasseradsorbierendes Molekularsieb oder ein auf einem Träger angebrachtes anderes Material mit hoher spezifischer Wärmekapazität, ausgewählt aus der Stoffgruppe Salzhydrate, Öle und kristallines, vernetztes Kunstharz aus der Reihe der Epoxidharze, der Polyurethanharze oder der Polyesterharze auf einer Außenfläche des Stopfens in wärmeleitender Verbindung mit dem Katalysatormaterial angeordnet ist.

2. Verschlußstopfen nach Anspruch 1, dadurch gekennzeichnet, daß die Katalysatoranordnung (5) mit einem metallischen Deckel (6) thermisch gekoppelt ist und daß das Molekularsiebmaterial (7) in Form einer in einem metallischen Käfig (8) angeordneten Schüttung mit dem Deckel (6) in wärmeleitender Verbindung steht.

**Claims**

1. Closure stopper for batteries containing aqueous electrolytes, which stopper has a device for the catalytic recombination of the gases generated during operation of the battery, characterised in that a water-adsorbing molecular sieve or another material of high specific thermal capacity applied to a carrier and selected from the group of substances comprising salt hydrates, oils and crystalline, cross-linked synthetic resins from the range comprising expoxy resins, polyurethane resins or polyester resins is arranged on an outer surface of the stopper in thermally conducting combination with the catalyst material.

2. Closure stopper according to claim 1, characterised in that the catalyst arrangement (5) is thermally coupled to a metallic cover (6), and that the molecular sieve material (7) in the form of a packing arranged in a metallic case (8) is in thermally conducting combination with the cover (6).

## Revendications

1. Bouchon pour accumulateurs à électrolytes aqueux, comportant un dispositif pour la recombinaison catalytique des gaz se dégageant au cours du fonctionnement de l'accumulateur, bouchon caractérisé en ce qu'un tamis moléculaire adsorbant l'eau ou un autre matériau de capacité calorifique spécifique élevée, rapporté sur un support et sélectionné à partir du groupe de substances comprenant les hydrates salins, les huiles et les résines synthétiques cristallines réticulées de la série des résines époxy, des résines de polyuréthane ou des résines de polyester, est disposé sur une surface externe du bouchon en liaison thermiquement conductrice avec le matériau catalyseur.

2. Bouchon selon la revendication 1, caractérisé en ce que le dispositif catalyseur (5) est couplé thermiquement avec un couvercle métallique (6), tandis que le matériau du tamis moléculaire (7), sous la forme d'un produit foisonné disposé dans une cage métallique (8) est en liaison thermiquement conductrice avec le couvercle (6).

Fig.1

Fig.2

Fig.3